(19) **Europäisches Patentamt / European Patent Office / Office européen des brevets**

(11) **EP 1 498 462 B1**

(12) **EUROPEAN PATENT SPECIFICATION**

(45) Date of publication and mention of the grant of the patent:
**15.09.2010 Bulletin 2010/37**

(51) Int Cl.:
*C09J 133/00* [(2006.01)]     *C09J 133/02* [(2006.01)]
*C09J 133/04* [(2006.01)]     *C09J 133/18* [(2006.01)]
*C09J 7/02* [(2006.01)]

(21) Application number: **03745911.2**

(22) Date of filing: **04.04.2003**

(86) International application number:
**PCT/JP2003/004311**

(87) International publication number:
**WO 2003/085060 (16.10.2003 Gazette 2003/42)**

(54) **ACRYLIC PRESSURE SENSITIVE ADHESIVE AND PRESSURE SENSITIVE ADHESIVE TAPE**

ACRYLHAFTKLEBSTOFF UND HAFTKLEBEBAND

ADHESIF AUTOCOLLANT ACRYLIQUE ET RUBAN AUTOADHESIF

(84) Designated Contracting States:
**DE FR GB**

(30) Priority: **04.04.2002 JP 2002102851**
**18.09.2002 JP 2002272225**
**27.02.2003 JP 2003051471**

(43) Date of publication of application:
**19.01.2005 Bulletin 2005/03**

(73) Proprietors:
• **SEKISUI CHEMICAL CO., LTD.**
  **Osaka-shi,**
  **Osaka 530-8565 (JP)**
• **DENSO CORPORATION**
  **Kariya-shi,**
  **Aichi-ken, 448-8661 (JP)**

(72) Inventors:
• **KAMINE, Tetsuji,**
  **c/o Sekisui Chemical Co., Ltd.**
  **Amagasaki-shi, Hyogo 661-8564 (JP)**
• **TODA, Tomoki,**
  **c/o Sekisui Chemical Co., Ltd.**
  **Amagasaki-shi, Hyogo 661-8564 (JP)**

• **HORIOKA, Mikihiko,**
  **c/o Sekisui Chemical Co., Ltd.**
  **Amagasaki-shi, Hyogo 661-8564 (JP)**
• **UCHIYAMA, Kazuhisa,**
  **c/o DENSO CORPORATION**
  **Kariya-shi, Aichi 448-8661 (JP)**
• **ITO, Masahiro,**
  **c/o DENSO CORPORATION**
  **Kariya-shi, Aichi 448-8661 (JP)**
• **OKAMOTO, Yasushi,**
  **c/o DENSO CORPORATION**
  **Kariya-shi, Aichi 448-8661 (JP)**

(74) Representative: **Brehm, Hans-Peter et al**
**Hansmann & Vogeser**
**Patent- und Rechtsanwälte**
**Maximilianstrasse 4b**
**82319 Starnberg (DE)**

(56) References cited:
EP-A- 0 899 987     JP-A- 8 041 436
JP-A- 9 194 798     JP-A- 10 226 775
JP-A- 2002 069 411     US-A- 5 772 851

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to an acrylic pressure sensitive adhesive containing an acrylic polymer and a tackifier. Further, the present invention relates to a pressure sensitive adhesive tape comprising a substrate selected from paper, non-woven fabrics and sheet materials made from polyesters, polyolefines, polyurethanes, polychloroprenes, vinyl chloride resins or acrylic resins and having on one face or both faces of said substrate a pressure sensitive adhesive layer comprising the fore-mentioned acrylic pressure sensitive adhesive. Further, the present invention relates to a vehicular air condition unit which is obtainable by using the fore-mentioned pressure sensitive adhesive tape.

Preferably, said acrylic pressure sensitive adhesive and said pressure sensitive adhesive tape may be used for adhesion and fixation purposes of members within a closed space where odors become a problem, for example within a vehicle or a housing, or inside of electronic appliances where the presence of volatile gases become a problem.

BACKGROUND ART

Double coated tapes for adhesion and fixation purposes of members have been used in vehicles and in a housing as well as inside of electronic appliances. However, recently, problems of the use of these pressure sensitive adhesive tapes have been pointed out. For example, fogging of surfaces within an automotive, may occur due to the presence of high boiling point volatile components, or operation failures inside of electronic appliances may occur in some cases due to the presence of high boiling point volatile components and impurities. Accordingly, a pressure sensitive adhesive tape to be used in a closed space of vehicles such as automobiles and in housings and within electronic appliance is strongly required which avoids the release of odorous substances and which releases during use only a low total content of volatile gases, which may burden the environment.

Meanwhile, in Japan, the Ministry of Health, Labour and Welfore has passed guidelines which require a decrease of respective volatile organic compounds within rooms used by men and which require also a decrease of the total content of volatile organic compounds in the housing field, for example in hospitals. Further, also the German Association of the Automotive Industry (Verband der Automobilindustrie (VDA)) has determined an evaluation method for odors of members to be used inside of automotives in VDA 270 and also evaluation methods for volatile components in VDA 277 and VDA 278. Further, Deutsches Institut für Normung has determined in DIN No. 75201 rules to determine the behavior of fog caused by volatile components. Here, it is required to decrease not only the content of specific volatile substances, but also to avoid the occurrence of a variety of volatile substances in various fields.

The release and occurrence of volatile gases emitted from a usual pressure sensitive adhesive tape may be due to several reasons and sources including the presence of a remaining solvent, of a remaining monomer, of a remaining polymerization initiator, and of a tackifier which is typically used for improving the pressure sensitive physical properties. Also, the reason of odors may be due to the release and presence of volatile gas. Japanese Kokai Publication Hei-6-122859 discloses a method for obtaining a pressure sensitive adhesive essentially free of remaining monomer. This method provides for polymerizing a monomer having a high molecular weight and a low saturated steam pressure. Further, Japanese Kokai Publication Hei-2-115291 discloses a pressure sensitive adhesive using an acrylic polymer obtained by polymerization of a certain acrylic monomer specific to reduce the generation of odor. Japanese Kokai Publication 2002-69411 discloses a method for obtaining a pressure sensitive adhesive tape comprising a pressure sensitive adhesive obtained by using a high purity acrylic polymer which comprises only a low content of volatile components such as a remaining initiator or unreacted monomer. This high purity acrylic polymer is produced at a high polymerization ratio by solution polymerization at a specified reaction temperature using a specified amount of an azo type polymerization initiator. Japanese Kokai Publication 2002-309210 discloses a pressure sensitive adhesive tape providing a low level of gas emission and obtained by block copolymerization. Further, Japanese Kokai Publication Hei-11-315260 discloses a method for obtaining a hot melt type pressure sensitive adhesive tape to be used as an anti-fogging pressure sensitive adhesive tape.

U.S. Patent 5,772,851 is related to the elimination of volatile residues from polyacrylate melts. Here is disclosed that the amount of volatile residues can be reduced to substantially below 100 ppm if entraining agents, such as steam, nitrogen, argon or $CO_2$ are introduced into the hot polyacrylate melt toward the end of the distillation under reduced pressure and are then taken off together with the volatile residues. A further substantial improvement is achieved if optimization of the polymer mixing and an increase in surface area are realized simultaneously. This is done by circulating the polyacrylate melt by means of a gear pump and a bypass. The thus obtained copolymers may be used in particular as UV-crosslinkable materials for coating, lamination and impregnation, in particular for the production of contact adhesives, contact adhesive labels and blocking foils. The materials may be applied in a conventional manner by brushing, spraying, roller coating, knife coating or pouring, if necessary at elevated temperatures, in general at from 20 to 180 ˚C, to conventional substrates, for example to paper, board, wood, glass, metals, metal foils, for example aluminium and copper, and plastics films, for example plasticized PVC, polypropylene, polyethylene, polyamides and polyesters. It is also possible to coat nonwovens, fibers, leather and textile fabrics. The thus obtainable contact adhesives may be modified and/or compounded in manner known per se. The conventional tackifiers, for example hydrocarbon resins, modified rosins, pinene and terpene resins, or homopolymers such as poly(2-methylhexyl acrylate) and poly(n-butyl acrylate), plasticizers, for example those based on mono-, di- or polyester compounds, pigments, stabilizers, styrene/ butadiene copolymers or polyvinyl ethers may be added to the copolymers in amounts of up to 50 % by weight.

However, even when these specific pressure sensitive adhesive tapes are used in a closed space within housings or vehicles, or inside of electronic appliances, than notizable odor may still occur. The suppression of odor by simply not using specific volatile components is insufficient. According to this approach, the occurrence of odor cannot be decreased to a not-notizable level. Further, in the case of adding a tackifier, the high boiling point volatile components which are typically contained in the tackifier are not taken into consideration and therefore, with respect to the usual pressure sensitive adhesive containing said tackifier, no satisfactory effect to reduce the occurrence of odor has been achieved by conventional techniques.

SUMMARY OF THE PRESENT INVENTION

The purpose of the present invention is to provide an acrylic pressure sensitive adhesive and a pressure sensitive adhesive tape suited for use for adhesion and fixation purposes of members in a closed space, for example within a vehicle or a housing, where the occurrence of odor would create a problem; or suited for use inside of electronic appliances where the presence of volatile gases would cause a problem. With other words, it is the objective technical problem of the present invention to provide a tackifier containing acrylic pressure sensitive adhesive and an adhesive tape made therefrom, which do not release and generate notizable odor when used in a closed space or room, such as inside of house or automobile.

The solution of this technical problem according to the present invention may be realized in several embodiments.

According to a first aspect, the present invention provides an acrylic pressure sensitive adhesive, containing an acrylic polymer and a tackifier, wherein

- the acrylic polymer has been polymerized in the presence of a polymerization initiator having a half-life period of 10 hours at a temperature of 80 ˚C or lower;
- the tackifier contains component(s) having a molecular weight of 600 or lower in an amount of 13 % by weight or less;

such as to provide an acrylic pressure sensitive adhesive which frees during a 30 minutes lasting period at 90 ˚C a proportion (A) of volatile components of 500 ppm or less based on the following equation (1):

$$\text{proportion A (ppm)} = \frac{\text{evolved amount X of volatile components } (\mu g)}{\text{weight of adhesive before heating (g)}} \quad (1)$$

wherein the evolved amount X of volatile components has been calculated from the peak surface area obtained by gas-chromatographic and mass-spectrometric (GC - MS) method and expressed by conversion to toluene weight based on an absolute calibration curve produced by using toluene.

According to a second aspect, the present invention provides an acrylic pressure sensitive adhesive, containing an acrylic polymer and a tackifier, wherein

- the acrylic polymer has been polymerized in the presence of a polymerization initiator having a half-life period of 10 hours at a temperature of 80 ˚C or lower;
- the tackifier contains component(s) having a molecular weight of 600 or lower in an amount of 13 % by weight or less;

such as to provide an acrylic pressure sensitive adhesive which frees during a 30 minutes lasting period at 120 ˚C a proportion (B) of volatile components of 600 ppm or less based on the following equation (2):

$$\text{proportion B (ppm)} = \frac{\text{evolved amount Y of volatile components } (\mu g)}{\text{weight of adhesive before heating (g)}} \quad (2)$$

wherein the evolved amount Y of volatile components has been calculated from the peak surface area obtained by gas-chromatographic and mass-spectrometric (GC - MS) method and expressed by conversion to n-hexadecane weight based on an absolute calibration curve produced by using n-hexadecane.

According to a preferred embodiment of the present invention the preparation method for preparing the fore-mentioned acrylic pressure sensitive adhesive(s), uses a polymerization initiator which is a diacyl peroxide having aliphatic acyl groups each comprising 8 or more carbon atoms.

According to a third aspect, the present invention provides a pressure sensitive adhesive tape comprising a substrate selected from paper, non-woven fabrics and sheet materials made from polyesters, polyolefines, polyurethanes, polychloroprenes, vinyl chloride resins or acrylic resins and having on one face or both faces of said substrate a pressure sensitive adhesive layer comprising one of the fore-mentioned acrylic pressure sensitive adhesive(s), which pressure sensitive adhesive tape frees during a 30 minutes lasting period at 90 ˚C a proportion (C) of volatile components of 300 ppm or less based on the following equation (3):

$$\text{proportion C (ppm)} = \frac{\text{evolved amount P of volatile components } (\mu g)}{\text{weight of adhesive before heating (g)}} \quad (3)$$

wherein the evolved amount P of volatile components has been calculated from the peak surface area obtained by gas-chromatographic and mass-spectrometric (GC - MS) method and expressed by conversion to toluene weight based on an absolute calibration curve produced by using toluene.

According to a fourth aspect, the present invention provides a pressure sensitive adhesive tape comprising a substrate selected from paper, non-woven fabrics and sheet materials made from polyesters, polyolefines, polyurethanes, polychloroprenes, vinyl chloride resins or acrylic resins and having on one face or both faces of said substrate a pressure sensitive adhesive layer comprising one of the fore-mentioned acrylic pressure sensitive adhesive(s), which pressure sensitive adhesive tape frees during a 30 minutes lasting period at 120 ˚C a proportion (D) of volatile components of 400 ppm or less based on the following equation (4):

$$\text{proportion D (ppm)} = \frac{\text{evolved amount Q of volatile components } (\mu g)}{\text{weight of adhesive before heating (g)}} \quad (4)$$

wherein the evolved amount Q of volatile components has been calculated from the peak surface area obtained by gas-chromatographic and mass-spectrometric (GC - MS) method and expressed by conversion to n-hexadecane weight based on an absolute calibration curve produced by using n-hexadecane.

According to a fifth aspect, the present invention provides a vehicular air conditioner unit, which is obtainable by using one of the fore-mentioned pressure sensitive adhesive tape(s).

DETAILED DISCLOSURE OF THE PRESENT INVENTION

In the following, the present invention is described in more detail.

The acrylic pressure sensitive adhesive according to the above-stated first aspect of the present invention frees during a 30 minutes lasting period at 90 ˚C a proportion (A) of volatile components of 500 ppm or less based on the following equation (1):

$$\text{proportion A (ppm)} = \frac{\text{evolved amount X of volatile components } (\mu g)}{\text{weight of adhesive before heating (g)}} \quad (1)$$

wherein the evolved amount X of volatile components has been calculated from the peak surface area obtained by gas-chromatographic and mass-spectrometric (GC - MS) method and expressed by conversion to toluene weight based on an absolute calibration curve produced by using toluene, as explained in more detail in the following.

If the volatile component concentration A is 500 ppm or less under the above-mentioned conditions, no odor problem will occur even if the tape is used in a closed space of a vehicle or housing.

The above-mentioned content X of volatile components can be measured by heating a certain amount of weighed acrylic pressure sensitive adhesive at 90 ˚C for 30 minutes using a thermal desorption apparatus (e.g. ATD-400, manufactured by PerkinElmer Inc.) and measuring the amount of volatile components emitted at that time by GC-MS apparatus (e.g. Automass II-15, manufactured by JEOL Ltd.). An accurately weighed amount of acrylic pressure sensitive adhesive of about 20 mg is put into a sample tube (inner diameter about 5 mm, length about 10 cm) and heated for 30 minutes at 90 ˚C while helium gas is circulated at 1.5 mL/min, and the emitted volatile components are collected and concentrated in a trap tube installed in a thermal desorption apparatus; then the trap tube is heated at 280 ˚C for 10 minutes and introduced into the GC-MS. For GC-MS measurement, a non-polar capillary column (HP-1, manufactured by Agilent Technologies, 0.32 mm $\times$ 60 m $\times$ 0.25 $\mu$m) is used and the temperature of the column is kept at 40 ˚C for 4 minutes and then heated to 100 ˚C at 5 ˚C/min heating rate and further to 320 ˚C at 10 ˚C/min heating rate and kept at 320 ˚C for 3 minutes. The MS measurement range is 30 to 400 amu, the He flow rate is 1.5 mL/min, the ionization voltage is 70 eV, the ion source is kept at 230 ˚C, the interface at 250 ˚C, and the transfer line at 225 ˚C. The amount of volatile components can be calculated from the obtained peak surface area by conversion into toluene weight based on an absolute calibration curve previously obtained by using toluene.

With respect to the acrylic pressure sensitive adhesive according to the first aspect of the present invention, the total amount of the remaining polymerization initiator detected by the above-mentioned measurement conditions is preferably 30 ppm or less, and the total amount of the acrylic monomer is preferably 50 ppm or less, and the content of volatile components is preferably 50 ppm or less after 30 minutes or longer retention time. In such cases, the occurrence of odor is further reduced.

The acrylic pressure sensitive adhesive according to the above-stated second aspect of the present invention frees during a 30 minutes lasting period at 120 ˚C a proportion (B) of volatile components of 600 ppm or less based on the following equation (2):

$$\text{proportion B (ppm)} = \frac{\text{evolved amount Y of volatile components } (\mu g)}{\text{weight of adhesive before heating (g)}} \quad (2)$$

wherein the evolved amount Y of volatile components has been calculated from the peak surface area obtained by gas-chromatographic and mass-spectrometric (GC - MS) method and expressed by conversion to n-hexadecane weight based on an absolute calibration curve produced by using n-hexadecane, as explained in more detail in the following.

If the volatile component concentration B is 600 ppm or less under the above-mentioned conditions, not only no odor problem occurs but also the total amount of high boiling point volatile components is so small that no fogging problem takes place. Even if said tape is used inside of an electronic appliance, said tape does not cause a problem.

The above-mentioned volatile component content Y can be measured by means of the same method as described above in the case of the acrylic pressure sensitive adhesive according to the first aspect of the present invention.

The amount is calculated by keeping the column temperature at 50 ˚C for 2 minutes, heating to 160 ˚C at 25 ˚C/min heating rate and then to 300 ˚C at 10 ˚C/min heating rate and keeping at the temperature for 20 minutes in GC-MS measurement and carrying out calculation from the obtained peak surface area by weight conversion based on an absolute calibration curve previously obtained by using n-hexadecane.

The acrylic pressure sensitive adhesive according to the present invention contains as a main component an acrylic polymer. The selection of this acrylic polymer is not particularly limited; as suited and preferred acrylic polymer may be mentioned:

a homopolymer of a (meth)acrylic acid ester monomer or

a copolymer of a (meth)acrylic acid ester monomer with another vinyl monomer copolymerizable with said monomer.

Preferred examples of said (meth)acrylic acid ester monomer are esters of acrylic acid or methacrylic acid with a primary or a secondary alcohol comprising an alkyl group having 4 to 12 carbon atoms.

A vinyl monomer copolymerizable with the above-mentioned (meth)acrylic acid ester monomer is used for increasing an agglomeration force by modification of the acrylic polymer. For example, those vinyl monomers which comprise themselves a high glass transition point (Tg) will increase the Tg of the polymer to be obtained. Further, those vinyl monomers containing functional groups in their molecules will contribute to the formation of a mesh structure of the polymer molecules by crosslinking reaction of their functional groups with an externally added crosslinking agent.

Examples of the above-mentioned vinyl monomers which can increase Tg of the polymer to be obtained are styrene, acrylonitrile, methyl methacrylate, cyclohexyl (meth)acrylate, benzyl (meth)acrylate, N-phenylmaleimide, N-cyclohexylmaleimide, and N-vinylpyrrolidone. Further, examples of those vinyl monomers containing functional groups in their molecules, which will contribute to the formation of the mesh structure of the polymer molecules by crosslinking reaction of their functional groups with an externally added crosslinking agent are carboxyl-containing monomers such as acrylic acid, methacrylic acid, crotonic acid, maleic acid, itaconic acid, and maleic anhydride; or hydroxyl-containing monomers such as 2-hydroxyethyl (meth)acrylate, n-methylolacrylamide; or epoxy-containing monomers such as glycidyl acrylate, and allyl glycidyl ether.

In the case where the above-mentioned acrylic polymer is a copolymer of the (meth)acrylic acid ester monomer and another vinyl monomer copolymerizable with said ester monomer, the content of the (meth)acrylic acid ester monomer is preferably 70 % by weight or higher, referred to the monomer composition. Also, in the case where the vinyl monomer is added for increasing the Tg of the polymer to be obtained, the content of such a vinyl monomer is preferably 30 % by weight or less. In the case where the vinyl monomer is added for contributing to the formation of the mesh structure by crosslinking reaction, the content of such a vinyl monomer may be controlled so as to keep the content of the functional group-containing monomer preferably in a range of 0.1 to 10 % by weight, more preferably in a range of 0.05 to 5 % by weight.

The above-mentioned acrylic polymer may be obtained by polymerization of the above (meth)acrylic acid ester monomer or by copolymerization of a mixture of the above (meth)acrylic acid ester monomer and the vinyl monomer copolymerizable therewith. The selection of a suited polymerization method is not particularly limited and conventionally known polymerization methods may be used, for example, a solution polymerization method (boiling point polymerization, below boiling point polymerization), an emulsion polymerization method, a suspension polymerization method, a mass polymerization method and a living polymerization method may be mentioned. Among these polymerization methods, the solution polymerization method using neither a surfactant nor a dispersant is preferred.

The selection of a polymerization initiator to be used in the polymerization of the above-mentioned acrylic polymer is not particularly limited; for example, preferred is a peroxide type polymerization initiator or an azo type polymerization initiator. However, according to an essential feature of the present invention, in any cases such a polymerization initiator is selected and used, having a half-life period of 10 hours at a temperature of 80 ˚C or lower. The use of these specific polymerization initiator(s) provides that no volatile component(s) of the polymerization initiator or its residue remained left in the acrylic polymer to be obtained. A single polymerization initiator of said type may be used or a combination of two or more types of those polymerization initiators may be used.

The selection of the above-mentioned peroxide type polymerization initiator is not particularly limited; examples thereof include:

organic peroxides such as peroxycarbonate, ketone peroxides, peroxyketals, hydroperoxides, dialkyl peroxides, diacyl peroxides (lauroyl peroxide, benzoyl peroxide, 3,5,5-trimethylhexanoyl peroxide), and peroxy ester. Among these organic peroxides, peroxy esters having an acid residue with 8 or more carbon atoms and having an alcohol residue with 6 or fewer carbon atoms are preferred with respect to odor suppression of the acrylic polymer to be obtained.

Examples of those peroxy esters are tert-hexylperoxy-2-ethylhexanoate, tert-butylperoxy-2-ethylhexanoate, tert-butylperoxy-3,5,5-trimethylhexanoate, and tert-butylperoxylaurate.

Also preferred are diacyl peroxides having an aliphatic acyl group with 8 or more carbon atoms. Examples of those diacyl peroxides are lauroyl peroxide, 3,5,5-trimethylhexanoyl peroxide, octanoyl peroxide, and stearoyl peroxide.

Further, the selection of the above-mentioned azo type polymerization initiator is not particularly limited; examples thereof are azocompounds such as 2,2'-azobis(isobutyronitrile), 2,2'-azobis(2-methylbutyronitrile), 2,2'-azobis(2,4-dimethylvaleronitrile), and 2,2'-azobis(dimethyl isobutyrate).

According to an essential feature of the present invention, the polymerization of the above-mentioned acrylic polymer is performed by means of a polymerization initiator, having a half-life period of 10 hours at a temperature of 80 ˚C or lower. The use of these specific polymerization initiator(s) provides that no volatile component(s) of the polymerization initiator or its residue remained left in the reaction solution. Further, the polymerization reaction is performed as long as possible, while keeping the polymerization temperature higher than the temperature of the 10-hours half-life period. Further, in order to decrease the content of still remaining polymerization initiator after termination of the polymerization reaction and to perform the polymerization reaction quickly and completely, it is preferred to keep the polymerization temperature T in the final stage of the polymerization reaction for a long period in a range satisfying the conditions defined by the following equation (5):

$$t_{1/2} + 25 \geq T \geq t_{1/2} + 5 \qquad\qquad (5)$$

wherein:

$t_{1/2}$ means the temperature of the 10-hours half-life period.

Further, in order to decrease the still remaining content of the unreacted monomer, of the unreacted polymerization initiator, or of other impurities in the as obtained acrylic polymer at the stage of completing the polymerization reaction even more, it is preferred to carry out additional operation(s) for removing still remaining unreacted monomer, unreacted polymerization initiator, and still remaining other impurities.

The practical means for decreasing the content of still remaining monomer in the above-mentioned polymerization step include, for example, a method for separating and removing the remaining monomer in a refluxing solvent during the terminal stage of the polymerization reaction, and a method of adding a scavenger monomer having a low boiling point and easy to be removed by reaction with the acrylic monomer or by adding a modified vinyl monomer in the terminal stage of the polymerization reaction.

The above-mentioned method for removing the remaining monomer from the polymerization system may include a method for replacing the refluxing solution of the polymerization solvent with a new solvent; a method for adding a scavenger monomer with a relatively low boiling point such as vinyl acetate, vinyl butyl ether, methyl acrylate, or styrene at the stage where the degree of polymerization degree reaches 95 % or higher, preferably 98 % or higher and then removing the remaining monomer by means of the scavenger monomer; and a method for washing the acrylic polymer at the completion of the polymerization reaction with a solvent having a low dissolving power for the acrylic polymer; here, suited solvents include a low boiling point solvent such as methanol, ethanol, n-hexane, or n-heptane. These methods may be employed solely or a combination of two or more kinds of these methods may be used.

The acrylic pressure sensitive adhesive according to the invention contains a tackifier for the purpose of improving the pressure sensitive adhesion physical properties. This tackifier contains components having a molecular weight of 600 or lower in an amount of 13 % by weight or less. The use of such a tackifier provides that the amount of volatile component(s) emitted from the tackifier can be suppressed without deteriorating the pressure sensitive adhesion physical properties. Actually, the pressure sensitive adhesion physical properties are improved, and the acrylic pressure sensitive adhesive can be obtained comprising the property of reduced or completely surpressed release and freeing of odor. The present invention provides an acrylic pressure sensitive adhesive which frees during a 30 minutes lasting period at 120 ˚C only 600 ppm or less volatile components, referred to the above explained n-hexadecane standard. The freeing of those volatile component(s) having a high boiling point, and having a 30 minutes or longer retention time and being difficult to be removed by drying can be reduced to an amount of 50 ppm or less. The molecular weight and the content of the tackifier can be measured by GPC and calculated from the surface area ratio and the value obtained by conversion to the polystyrene standard.

Examples of suited tackifiers include:

rosin resins, rosin-modified phenol resins,
disproportionation rosin ester resins, polymerized rosin esters, hydrogenated rosin ester resins, terpene phenol resins, cumarone indene resins, alkylphenol resin, and
petroleum resins. Among these resins, alicyclic saturated hydrocarbon resins belonging to the rosin resins, polymerized rosin resins, and petroleum resins are preferred since the removal of the low molecular weight component(s) is facilitated.

The method of removing those component(s) having a molecular weight of 600 or less from the above-mentioned tackifier may include a method for heating and melting the tackifier at a softening point or higher, and a method of steam blowing. In order to prevent oxidation reaction with oxygen in air in the case of the method for heating and melting the tackifier, it is preferred to perform said heating in an inert gas such as nitrogen, helium or the like. Further, the heating period is preferably controlled to about 1 to 5 hours in order to avoid a decomposition of the tackifier by said heating treatment. In the case of steam blowing, when steam blowing is performed subsequently to heating and melting the tackifier, and the pressure is finally reduced to about 1 to 50 kPa, than the content of volatile component(s) can be reduced and the occurrence of odor can be suppressed. The duration of steam blowing is preferably about 1 to 5 hours. If the duration of the steam blowing treatment is shorter than 1 hour, than the obtainable effects for decreasing the release and freeing of volatile gas and for suppressing the occurrence of odor are insufficient; a steam blowing treatment longer than 5 hours, does not provide so much improved effects.

The content of the above-mentioned tackifier is not particularly limited; preferred is a tackifier content of from 0.1 to 35 % by weight referring to the weight of the acrylic polymer.

The acrylic pressure sensitive adhesive of the invention may contain a crosslinking agent. Addition of the crosslinking agent is effective to increase the agglomeration force, because the crosslinking agent reacts with both, the functional groups of the acrylic polymer and the functional groups of the tackifier, and improves the crosslinked structure of the final product. The selection of the above-mentioned crosslinking agent is not particularly limited; suited crosslinking agents may include, for example, isocyanate type crosslinking agents, aziridine type crosslinking agents, epoxy type crosslinking agents, and metal chelating type crosslinking agents.

As far as necessary, the acrylic pressure sensitive adhesive according to the present invention may further contain additives such as a plasticizer, an emulsifier, a softening agent, a filler, a pigment and a dye. Preferably, these additives are also controlled and subjected to similar or proper treatments in order to reduce and remove the content of remaining volatile components as far as possible.

The acrylic pressure sensitive adhesive according to the present invention may be used to prepare a pressure sensitive adhesive tape as described above along with the third aspect and with the fourth aspect, each according to the present invention.

The pressure sensitive adhesive tape according to the above-stated third aspect of the present invention frees during a 30 minutes lasting period at 90 °C a proportion (C) of volatile components of 300 ppm or less based on the following equation (3):

$$\text{proportion C (ppm)} = \frac{\text{evolved amount P of volatile components } (\mu g)}{\text{weight of adhesive before heating (g)}} \quad (3)$$

wherein the evolved amount P of volatile components has been calculated from the peak surface area obtained by gas-chromatographic and mass-spectrometric (GC - MS) method and expressed by conversion to toluene weight based on an absolute calibration curve produced by using toluene, as explained in more detail in the following.

The pressure sensitive adhesive tape according to the above-stated fourth aspect of the present invention frees during a 30 minutes lasting period at 120 °C a proportion (D) of volatile components of 400 ppm or less based on the following equation (4):

$$\text{proportion D (ppm)} = \frac{\text{evolved amount Q of volatile components } (\mu g)}{\text{weight of adhesive before heating (g)}} \quad (4)$$

wherein the evolved amount Q of volatile components has been calculated from the peak surface area obtained by gas-chromatographic and mass-spectrometric (GC - MS) method and expressed by conversion to n-hexadecane weight based on an absolute calibration curve produced by using n-hexadecane, as explained in more detail in the following.

The above-mentioned content P or content Q of volatile component(s) can be measured by means of the same method as described above in the case of the acrylic pressure sensitive adhesive according to the first or second aspect of the present invention.

The pressure sensitive adhesive tape according to the present invention may comprise only the pressure sensitive adhesive layer(s) which contain the acrylic pressure sensitive adhesive(s) of the present invention, or these pressure sensitive adhesive layer(s) may be applied on one face of a substrate or may be applied on or both faces of a substrate.

The selection of a suited substrate is not particularly limited; here may be mentioned, for example:

paper, non-woven fabrics, and sheet-like formed bodies made of polyesters, polyolefins, polyurethanes, polychloroprenes, vinyl chloride resin, and acrylic resins.

Further, the above-mentioned substrate may be subjected to foaming treatment. Preferably, the selected substrate is made from a previously refined material and/or has been subjected to a previous treatment for the removal of volatile components in order to achieve a satisfying suppression of odor.

The selection of a suited method for preparing the pressure sensitive adhesive tape according to the present invention is not particularly limited, and conventionally known preparation methods may be used. For example, a method for forming the pressure sensitive adhesive layer directly on the substrate; a method for forming the pressure sensitive adhesive layer on a paper enabled for a release treatment and then transferring the pressure sensitive adhesive from this process paper to the substrate may be mentioned, here.

For example, the acrylic pressure sensitive adhesive of the present invention may be applied in a prescribed thickness on the substrate or on the process paper, and a drying step is performed in order to remove the solvent. When performing the drying step in order to remove the solvent, the drying temperature may be increased as far as possible so long no foaming of the substrate or of the process paper occurs, or the retention time in the drying furnace, may be extended, or a reduced pressure may be adjusted and maintained in the drying furnace, and the amount of the drying air flowing through the drying furnace may be increased, in order to further decrease the remaining content of the volatile component(s) in the pressure sensitive adhesive tape(s) according to the present invention. These steps may properly be selected and performed in combination. Also, in the case of curing and maintaining the pressure sensitive adhesive tape(s) of the invention at curing conditions, the content of volatile component(s) can be reduced by adjusting the curing temperature and by decreasing the pressure in the curing atmosphere; accordingly, the occurrence of odor can be avoided.

The use of the pressure sensitive adhesive tape(s) according to the present invention enables, an adhesive structure wherein an emission of volatile gas freed from the pressure sensitive adhesive tape(s) and affecting the electronic appliance(s) is essentially avoided and an occurrence of odor attributed to the pressure sensitive adhesive tape(s) is suppressed. The pressure sensitive adhesive tapes are particularly suited for the use within the interior of automobiles, where the spaces are narrow and odor becomes a problem. Especially a vehicular air conditioner unit which is obtainable by using the pressure sensitive adhesive tape(s) according to the present invention is remarkably improved with respect to odor suppression as compared with those conventional vehicular air conditioner units obtainable by using the conventional pressure sensitive adhesive tape(s).

BEST MODE FOR CARRYING OUT THE PRESENT INVENTION

In the following, the present invention will be described in more detail with reference to Examples. However, the scope of the present invention should not be limited to these Examples.

Example 1 (not covered by the claims):

A reaction vessel equipped with a thermometer, a stirrer, a cooling pipe, a dropping funnel, and a nitrogen gas introduction pipe, is provided. A monomer mixture containing 70 g n-butyl acrylate, 27 g 2-ethylhexyl acrylate, 3 g acrylic acid, and 0.5 g 2-hydroxyethyl methacrylate is dissolved in 83 g ethyl acetate and heated within said reaction vessel to reflux temperature. Lauroyl peroxide having a 10 hours half-life period at a temperature of 62°Cserves as polymerization initiator. 4 mmol of said polymerization initiator are properly added to said mixture in order to start the polymerization reaction of the acrylic monomers. Following a 4 hours polymerization reaction, again 2 mmol polymerization initiator are properly added, and the polymerization reaction is continued for further 4 to 6 hours to decrease the content of remaining monomers. Thereafter, the polymerization reaction is continued for further 10 hours (the polymerization terminal stage) in order to decrease the content of remaining monomers and remaining initiator. The obtained solution is cooled in order to provide an acrylic polymer solution.

100 g of said obtained acrylic polymer solution is evenly mixed with 1.5 g of a functional isocyanate type crosslinking agent [Coronate L (active substance 55 %), manufactured by Nippon Polyurethane Industry Co., Ltd.] to provide an acrylic pressure sensitive adhesive.

The obtained acrylic pressure sensitive adhesive is applied in a thickness of 60 μm after drying to one surface of a substrate, namely to a 50 μm thick polyethylene terephthalate film and is dried for 5 minutes at 120 °C for complete removal of the solvent to provide a pressure sensitive adhesive tape.

Example 2 (not covered by the claims):

An acrylic pressure sensitive adhesive and a pressure sensitive adhesive tape are produced essentially in the same manner as described above in Example 1; except, tert-hexylperoxy-2-ethylhexanoate having a 10 hours half-life period at a temperature of 70 °C is used and serves as the polymerization initiator.

Example 3 (not covered by the claims):

An acrylic pressure sensitive adhesive and a pressure sensitive adhesive tape are produced essentially in the same manner as described above in Example 1; except, tert-butylperoxy-2-ethylhexanoate is used and serves as the polymerization initiator.

Example 4 (not covered by the claims):

An acrylic pressure sensitive adhesive and a pressure sensitive adhesive tape are produced essentially in the same manner as described above in Example 3; except, 5 g vinyl acetate monomer are added subsequently to a 10 hours lasting period of the polymerization reaction.

Example 5:

25 g tackifier containing 9.4 % by weight of a component having a molecular weight of 600 or lower are added to 100 g of the acrylic polymer as obtained by the method of the above Example 4. Following even stirring, 1.5 parts by weight of an isocyanate type crosslinking agent [Coronate L (active substance 55 %), manufactured by Nippon Polyurethane Industry Co., Ltd.] are added, and the resulting mixture is again evenly stirred to provide an acrylic pressure sensitive adhesive.

The obtained acrylic pressure sensitive adhesive is applied in a thickness of 60 $\mu$m after drying to one face of a substrate, namely to a 50 $\mu$m thick polyethylene terephthalate film and dried for 5 minutes at 120 ˚C to provide a pressure sensitive adhesive tape.

Comparative Example:

An acrylic pressure sensitive adhesive and a pressure sensitive adhesive tape are produced essentially in the same manner as described above in Example 5; except 25 g of a tackifier containing 15.6 % by weight of a component having a molecular weight of 600 or lower are added.

Example 6 (not covered by the claims):

An acrylic pressure sensitive adhesive and a pressure sensitive adhesive tape are produced essentially in the same manner as described above in Example 4; except, tert-butylperoxy-2-ethylhexanoate having a 10 hours half-life period at a temperature of 70 ˚C is used and serves as the polymerization initiator. 4 mmol of said polymerization initiator are properly added in order to start the polymerization reaction. Following a 4 hours polymerization reaction, again, 2 mmol 3,5,5-trimethylhexanoyl peroxide are properly added, and the reaction is continued in order to further decrease the content of remaining monomers.

Example 7:

An acrylic pressure sensitive adhesive and a pressure sensitive adhesive tape are produced essentially in the same manner as described above in Example 5; except, the acrylic polymer obtained in Example 6 is used.

The acrylic pressure sensitive adhesives and pressure sensitive adhesive tapes obtained in Examples 1 to 7 and in the Comparative Example are evaluated for odorous properties, cloud forming, content of volatile component(s), and physical properties, using the following methods. The results are shown in Table 1.

Evaluation of odorous properties:

Evaluation is carried out according to VDA 270. Here, each pressure sensitive adhesive tape having a size of 50 cm$^2$ is maintained for 24 hours at 40 ˚C within a 1 liter glass bottle. Immediately after said period the heat-treated pressure adhesive tape is taken out from the glass tube and subjected to the sensory evaluation of odorous properties by three or more test persons. The sensory evaluation of each pressure sensitive adhesive tape occurs according to the following 6 criteria, and the average values were calculated:

    1: Odor is impossible to be sensed;
    2: Odor may be possibly sensed but not offensive;
    3: Odor is possibly to be clearly sensed, but not so much offensive;
    4: Offensive odor is sensed;
    5: Very offensive odor is sensed; and
    6: The sensed odor is not endurable.

Evaluation of cloud forming:

An amount of about 20 g of each pressure sensitive adhesive tape is maintained for 24 hours at 120 ˚C within a 100 ml glass bottle which is covered by a glass plate. Thereafter, the formation of cloud on the glass plate is observed. The following determination criteria for the evaluation are used:

    ○: No change is observed;
    □: A trace of fog is observed; and
    ×: Fog is clearly observed.

Measurement of the content of volatile component(s)

The content of volatile component(s) is measured by heating a weighed amount of pressure sensitive adhesive tape by means of a thermal absorption apparatus (ATD-400, manufactured by PerkinElmer Inc.) at the time following a 30 minutes lasting heating of the tape at 90 ˚C, and also at time following a 30 minutes lasting heating of the tape at 120 ˚C and measuring the content of emitted volatile component(s) by means of a GC-MS apparatus (e.g. Automass II-15, manufactured by JEOL Ltd.).

For GC-MS measurement, a non-polar capillary column (HP-1, manufactured by Agilent Technologies, 0.32 mm $\times$ 60 m $\times$ 0.25 $\mu$m) is used and in the case of heating for 30 minutes at 90 ˚C, the temperature of the column was kept at 40˚C for 4 minutes and then heated to 100˚C at 5 ˚C/min heating rate and further to 320˚C at 10 ˚C/min heating rate and kept at 320 ˚C for 3 minutes. In the case of heating for 30 minutes at 120 ˚, the temperature of the column was kept at 50˚C for 2 minutes and then heated to 160 ˚C at 25 ˚C/min heating rate and further to 300˚C at 10 ˚C/min heating rate and kept at the temperature for 20 minutes.

The MS measurement range was 30 to 400 amu, the He flow rate was 1.5 ml/min, the ionization voltage was 70 eV, the ion source was kept at 230 ˚C, the interface at 250 ˚C, and the transfer line at 225 ˚C. The content of volatile component(s) was calculated from the obtained peak surface area by weight conversion based on an absolute calibration curve previously produced by using toluene or n-hexadecane.

The content of volatile component(s) of each pressure sensitive adhesive tape was calculated according to the above-mentioned equations (3) or (4). The content of the volatile component(s) of each pressure sensitive adhesive was calculated according to the above-mentioned equations (1) or (2). With respect to the here used PET substrate, it was previously confirmed that there was no volatile component for the measurement.

The total content of remaining polymerization initiator and the total content of remaining acrylic monomer after heating for 30 minutes at 90 ˚C and the content of volatile component(s) after 30 minutes or longer retention time were also measured.

Evaluation of physical properties

The adhesion of each of the obtained pressure sensitive adhesive tapes was measured according to JIS Z0237.

Table 1

| | after 30 minutes at 90˚C (ppm) | | | | | after 30 minutes at 120˚C (ppm) | | odor | cloud | adhesion against peeling from SUS at 180˚C (N/25mm) |
| | pressure sensitive adhesive | pressure sensitive adhesive tape | | | | pressure sensitive adhesive | pressure sensitive adhesive tape | | | |
| | volatile component concentration A | volatile component concentration C | component content after 30 minutes or longer retention time | remaining polymerization initiator amount | total remaining monomer amount | volatile component concentration B | volatile component concentration D | | | |
|---|---|---|---|---|---|---|---|---|---|---|
| Example1 | 135 | 90 | 16 | 26 | 15 | 120 | 80 | 3. 2 | ○ | 9. 5 |
| Example2 | 116 | 77 | 18 | 20 | 20 | 111 | 74 | 2. 6 | ○ | 9. 7 |
| Example3 | 113 | 75 | 17 | 17 | 21 | 110 | 73 | 2. 6 | ○ | 9. 3 |
| Example4 | 98 | 65 | 15 | 15 | 10 | 105 | 70 | 2. 5 | ○ | 9. 7 |
| Example5 | 330 | 220 | 33 | 14 | 11 | 357 | 238 | 2. 7 | ○ | 17. 2 |
| Example6 | 78 | 52 | 13 | 13 | 10 | 95 | 63 | 1. 5 | ○ | 9. 6 |
| Example7 | 315 | 210 | 37 | 10 | 8 | 353 | 235 | 2. 3 | ○ | 18. 1 |
| Comparative Example | 960 | 640 | 478 | 14 | 10 | 1575 | 1050 | 5. 0 | △ | 16. 5 |

INDUSTRIAL APPLICABILITY

The present invention provides an acrylic pressure sensitive adhesive and a pressure sensitive adhesive tape to be used for adhesion and fixation purposes of members; preferably for use in a closed space or room, for example in a vehicle, or in a housing where occurrence of odor will cause a problem; or for use inside of electronic appliances where the presence of volatile gases will cause a problem. Further, the present invention provides a vehicular air conditioner unit obtainable by using said pressure sensitive adhesive tape(s).

**Claims**

1. An acrylic pressure sensitive adhesive,
   containing an acrylic polymer and a tackifier,
   **wherein**

   - the acrylic polymer has been polymerized in the presence of a polymerization initiator having a half-life period of 10 hours at a temperature of 80 ˚C or lower
   - the tackifier contains component(s) having a molecular weight of 600 or lower in an amount of 13 % by weight or less; such as to provide an acrylic pressure sensitive adhesive which frees during a 30 minutes lasting period at 90 ˚C a proportion (A) of volatile components of 500 ppm or less based on the following equation (1):

$$\text{proportion A (ppm)} = \frac{\text{evolved amount X of volatile components (µg)}}{\text{weight of adhesive before heating (g)}} \quad (1)$$

   wherein the evolved amount X of volatile components has been calculated from the peak surface area obtained by gas-chromatographic and mass-spectrometric (GC - MS) method and expresses by conversion to toluene weight based on an absolute calibration curve produced by using toluene.

2. An acrylic pressure sensitive adhesive,
   containing an acrylic polymer and a tackifier,
   **wherein**

   - the acrylic polymer has been polymerized in the presence of a polymerization initiator having a half-life period of 10 hours at a temperature of 80 ˚C or lower;
   - the tackifier contains component(s) having a molecular weight of 600 or lower in an amount of 13 % by weight or less; such as to provide an acrylic pressure sensitive adhesive which frees during a 30 minutes lasting period at 120˚Ca proportion (B) of volatile components of 600 ppm or less based on the following equation (2):

$$\text{proportion B (ppm)} = \frac{\text{evolved amount Y of volatile components (µg)}}{\text{weight of adhesive before heating (g)}} \quad (2)$$

3. The acrylic pressure sensitive adhesive according to Claim 1 or 2
   **wherein**
   the polymerization initiator is a diacyl peroxide having aliphatic acyl groups each comprising 8 or more carbon atoms.

4. A pressure sensitive adhesive tape
   comprising a substrate selected from paper, non-woven fabrics and
   sheet materials made from polyesters, polyolefines, polyurethanes, polychloroprenes, vinyl chloride resins or acrylic resins and having on one face or both faces of said substrate a pressure sensitive adhesive layer comprising the acrylic pressure sensitive adhesive according to anyone of Claims 1, 2 or 3,

which pressure sensitive adhesive tape frees during a 30 minutes lasting period at 90 ˚C a proportion (C) of volatile components of 300 ppm or less based on the following equation (3):

$$\text{proportion C (ppm)} = \frac{\text{evolved amount P of volatile components (µg)}}{\text{weight of adhesive tape before heating (g)}} \quad (3)$$

wherein the evolved amount P of volatile components has been calculated from the peak surface area obtained by gas-chromatographic and mass-spectrometric (GC - MS) method and expressed by conversion to toluene weight based on an absolute calibration curve produced by using toluene.

5. A pressure sensitive adhesive tape
comprising a substrate selected from paper, non-woven fabrics and sheet materials made from polyesters, polyolefines, polyurethanes, polychloroprenes, vinyl chloride resins or acrylic resins
and having on one face or both faces of said subtrate a pressure sensitive adhesive layer comprising the acrylic pressure sensitive adhesive according to anyone of Claims 1, 2 or 3,
which pressure sensitive adhesive tape frees during a 30 minutes lasting period at 120 ˚C a proportion (D) of volatile components of 400 ppm or less based on the following equation (4):

$$\text{proportion D (ppm)} = \frac{\text{evolved amount Q of volatile components (µg)}}{\text{weight of adhesive tape before heating (g)}} \quad (4)$$

wherein the evolved amount Q of volatile components has been calculated from the peak surface area obtained by gas-chromatographic and mass-spectrometric (GC - MS) method and expressed by conversion to n-hexadecane weight based on an absolute calibration curve produced by using n-hexadecane.

6. A vehicular air conditioner unit,
which is obtainable by using the pressure sensitive adhesive tape according to Claim 4 or 5.

**Patentansprüche**

1. Acrylhaftklebstoff,
der ein Acrylpolymer und einen Klebrigmacher enthält,
**dadurch gekennzeichnet, dass**

- das Acrylpolmer in Gegenwart eines Polymerisationsinitiators polymerisiert worden ist, der eine Halbwertsdauer von 10 Stunden bei einer Temperatur von 80 ˚C oder tiefer aufweist; und
- der Klebrigmacher eine oder mehrere Komponente(n) mit einem Molekulargewicht von 600 oder weniger, in einem Anteil von 13 Gew.-% oder weniger enthält;

so dass ein Acrylhaftklebstoff bereitgestellt wird, der im Verlauf von 30 Minuten bei 90 ˚C einen Anteil (A) an flüchtigen Komponenten von 500 ppm oder weniger freisetzt, wobei dieser Anteil (A) nach Maßgabe der folgenden Gleichung (1) bestimmt wird:

$$\text{Anteil A (ppm)} = \frac{\text{freigesetzter Anteil X (µg) an flüchtigen Komponenten}}{\text{Gewicht des Klebstoffs (g) vor der Erwärmung}} \quad (1)$$

wobei der freigesetzte Anteil X an flüchtigen Komponenten berechnet worden ist aus der Fläche unterhalb des Scheitelpunktes einer Kurve, die mit Hilfe eines gaschromatischen und massenspektrometrischen Verfahrens (GC-MS) erhalten worden ist, und

dieser freigesetzte Anteil X angegeben ist, nach Umwandlung in Toluolgewicht anhand einer absoluten, unter Anwendung von Toluol gebildeten Kalibrierungskurve.

2. Acrylhaftklebstoff,
der ein Acrylpolymer und einen Klebrigmacher enthält,
**dadurch gekennzeichnet, dass**

- das Acrylpolmer in Gegenwart eines Polymerisationsinitiators polymerisiert worden ist, der eine Halbwertsdauer von 10 Stunden bei einer Temperatur von 80 ˚C oder tiefer aufweist; und
- der Klebrigmacher eine oder mehrere Komponente(n) mit einem Molekulargewicht von 600 oder weniger, in einem Anteil von 13 Gew.-% oder weniger enthält;

so dass ein Acrylhaftklebstoff bereitgestellt wird, der im Verlauf von 30 Minuten bei 120 ˚C einen Anteil (B) an flüchtigen Komponenten von 600 ppm oder weniger freisetzt, wobei dieser Anteil (B) nach Maßgabe der folgenden Gleichung (2) bestimmt wird:

$$\text{Anteil B (ppm)} = \frac{\text{freigesetzter Anteil Y (µg) an flüchtigen Komponenten}}{\text{Gewicht des Klebstoffs (g) vor der Erwärmung}} \quad (2)$$

wobei der freigesetzte Anteil Y an flüchtigen Komponenten berechnet worden ist aus der Fläche unterhalb des Scheitelpunktes einer Kurve, die mit Hilfe eines gaschromatischen und massenspektrometrischen Verfahrens (GC-MS) erhalten worden ist, und

dieser freigesetzte Anteil Y angegeben ist, nach Umwandlung in n-Hexadecan-Gewicht anhand einer absoluten, unter Anwendung von n-Hexadecan gebildeten Kalibrierungskurve.

3. Acrylhaftklebstoff nach Anspruch 1 oder 2,
**dadurch gekennzeichnet, dass**
der Polymerisationsinitiator ein Diacylperoxid mit aliphatischen Acylgruppen ist, die je 8 oder mehr Kohlenstoffatome enthalten.

4. Haftklebeband,
mit einem Substrat, das ausgewählt ist aus Papier, Vliesstoffen und Schichtmaterialien, die ihrerseits bestehen aus Polyestern, Polyolefinen, Polyurethanen, Polychlorpropenen, Vinylchlorid harzen oder Acrylharzen; und eine Seite oder beide Seiten dieses Substrates mit einer Haftklebstoff-Schicht versehen ist bzw. sind, die einen Acrylhaftklebstoff nach einem der Ansprüche 1, 2 oder 3 aufweist,
wobei dieses Haftklebeband im Verlauf von 30 Minuten bei 90 ˚C einen Anteil (C) an flüchtigen Komponenten von 300 ppm oder weniger freisetzt, wobei dieser Anteil (C) nach Maßgabe der folgenden Gleichung (3) bestimmt wird:

$$\text{Anteil C (ppm)} = \frac{\text{freigesetzter Anteil P (µg) an flüchtigen Komponenten}}{\text{Gewicht des Klebebandes (g) vor der Erwärmung}} \quad (3)$$

wobei der freigesetzte Anteil P an flüchtigen Komponenten berechnet worden ist aus der Fläche unterhalb des Scheitelpunktes einer Kurve, die mit Hilfe eines gaschromatischen und massenspektrometrischen Verfahrens (GC-MS) erhalten worden ist, und

dieser freigesetzte Anteil P angegeben ist, nach Umwandlung in Toluolgewicht anhand einer absoluten, unter Anwendung von Toluol gebildeten Kalibrierungskurve.

5. Haftklebeband,
mit einem Substrat, das ausgewählt ist aus Papier, Vliesstoffen und Schichtmaterialien, die ihrerseits bestehen aus Polyestern, Polyolefinen, Polyurethanen, Polychlorpropenen, Vinylchloridharzen oder Acrylharzen; und eine Seite oder beide Seiten dieses Substrates mit einer

Haftklebstoff-Schicht versehen ist bzw. sind, die einen Acrylhaftklebstoff nach einem der Ansprüche 1, 2 oder 3 aufweist,

wobei dieses Haftklebeband im Verlauf von 30 Minuten bei 120 ˚C einen Anteil (D) an flüchtigen Komponenten von 400 ppm oder weniger freisetzt, wobei dieser Anteil (D) nach Maßgabe der folgenden Gleichung (4) bestimmt wird:

$$\text{Anteil D (ppm)} = \frac{\text{freigesetzter Anteil Q (µg) an flüchtigen Komponenten}}{\text{Gewicht des Klebebandes (g) vor der Erwärmung}} \quad (4)$$

wobei der freigesetzte Anteil Q an flüchtigen Komponenten berechnet worden ist aus der Fläche unterhalb des Scheitelpunktes einer Kurve, die mit Hilfe eines gaschromatischen und massenspektrometrischen Verfahrens (GC-MS) erhalten worden ist, und

dieser freigesetzte Anteil Q angegeben ist, nach Umwandlung in n-Hexadecan-Gewicht anhand einer absoluten, unter Anwendung von n-Hexadecan gebildeten Kalibrierungskurve.

6. Klimaanlage für ein Kraftfahrzeug,
die erhältlich ist unter Verwendung des Haftklebebandes nach Anspruch 4 oder 5.


**Revendications**

1. Une colle adhésive acrylique,
contenant un polymère acrylique et un agent poissant
**caractérisée en ce que**

- le polymère acrylique a été polymérisé en présence d'un initiateur de polymérisation, dont le temps de demi-vie est de 10 heures à une température de 80˚C et moins ; et que
- l'agent poissant contient un ou plusieurs composant(s) avec un poids moléculaire de 600 ou moins à raison de 13 pourcent en poids ou moins ;

de sorte à fournir une colle adhésive acrylique qui libère pendant une période de 30 minutes à 90˚C un taux (A) de composants volatils de 500 ppm ou moins, ce taux (A) étant déterminé selon la formule suivante (1) :

$$\text{taux (A) (ppm)} = \frac{\text{taux X des composants volatils libérés (µg)}}{\text{poids de la colle (g) avant échauffement}} \quad (1)$$

le taux X des composants volatils libérés ayant été calculé à partir de la surface de pic d'une courbe obtenue par la méthode de chromatographie en phase gazeuse couplée à la spectrométrie de masse (GC-MS), et ce taux X libéré étant indiqué après conversion en poids de toluène à partir d'une courbe de calibration absolue obtenue en utilisant le toluène.

2. Une colle adhésive acrylique,
contenant un polymère acrylique et un agent poissant
**caractérisée en ce que**

- le polymère acrylique a été polymérisé en présence d'un initiateur de polymérisation, dont le temps de demi-vie est de 10 heures à une température de 80˚C et moins ; et que
- l'agent poissant contient un ou plusieurs composant(s) avec un poids moléculaire de 600 ou moins à raison de 13 pourcent en poids ou moins ;

de sorte à fournir une colle adhésive acrylique qui libère pendant une période de 30 minutes à 120˚C un taux (B) de composants volatils de 600 ppm ou moins, ce taux (B) étant déterminé selon la formule suivante (2) :

$$\text{taux (B) (ppm)} = \frac{\text{taux Y des composants volatils libérés (µg)}}{\text{poids de la colle (g) avant échauffement}} \quad (2)$$

le taux Y des composants volatils libérés ayant été calculé à partir de la surface de pic d'une courbe obtenue par la méthode de chromatographie en phase gazeuse couplée à la spectrométrie de masse (GC-MS), et

ce taux Y libéré étant indiqué après conversion en poids de n-hexadécane à partir d'une courbe de calibration absolue obtenue en utilisant le n-hexadécane.

3. Une colle adhésive acrylique conformément à la revendication 1 ou la revendication 2,
   **caractérisée en ce que**
   l'initiateur de polymérisation est un peroxyde de diacyle avec des groupes acyle aliphatiques, chacun ayant 8 atomes de carbone ou plus.

4. Un ruban de colle adhésive,
   avec un substrat choisi parmi le papier, des tissus non tissés et d'autres matériaux en feuilles se composant de polyesters, de polyoléfines, de polyuréthanes, de polychloroprènes, de résines de chlorure de vinyle ou de résines acryliques ; un côté ou les deux côtés de ce substrat étant muni(s) d'une couche de colle adhésive qui contient une colle adhésive acrylique conformément à une des revendications 1, 2 ou 3,
   ce ruban de colle adhésive libérant pendant une période de 30 minutes à 90°C un taux (C) de composants volatils de 300 ppm ou moins, ce taux (C) étant déterminé par la formule suivante (3)

$$\text{taux (C) (ppm)} = \frac{\text{taux P des composants volatils libérés (µg)}}{\text{poids du ruban de colle (g) avant échauffement}} \quad (3)$$

le taux P des composants volatils libérés ayant été calculé à partir de la surface de pic d'une courbe obtenue par la méthode de chromatographie en phase gazeuse couplée à la spectrométrie de masse (GC-MS), et

ce taux P libéré étant indiqué après conversion en poids de toluène à partir d'une courbe de calibration absolue obtenue en utilisant le toluène.

5. Un ruban de colle adhésive,
   avec un substrat choisi parmi le papier, des tissus non tissés et d'autres matériaux en feuilles se composant de polyesters, de polyoléfines, de polyuréthanes, de polychloroprènes, de résines de chlorure de vinyle ou de résines acryliques ; un côté ou les deux côtés de ce substrat étant muni(s) d'une couche de colle adhésive qui contient une colle adhésive acrylique conformément à une des revendications 1, 2 ou 3, et
   ce ruban de colle adhésive libérant pendant une période de 30 minutes à 120°C un taux (D) de composants volatils de 400 ppm ou moins, ce taux (D) étant déterminé par la formule suivante (4)

$$\text{taux (D) (ppm)} = \frac{\text{taux Q des composants volatils libérés (µg)}}{\text{poids du ruban de colle (g) avant échauffement}} \quad (4)$$

le taux Q des composants volatils libérés ayant été calculé à partir de la surface de pic d'une courbe obtenue par la méthode de chromatographie en phase gazeuse couplée à la spectrométrie de masse (GC-MS), et

ce taux Q libéré étant indiqué après conversion en poids de n-hexadécane à partir d'une courbe de calibration absolue obtenue en utilisant le n-hexadécane.

6. Un climatiseur pour voiture,
   qui peut être obtenu en utilisant le ruban de colle adhésive conformément à la revendication 4 ou la revendication 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI6122859 B
- JP HEI2115291 B
- JP 2002069411 A
- JP 2002309210 A
- JP HEI11315260 B
- US 5772851 A